# EUROPÄISCHE PATENTANMELDUNG

(11) **EP 3 073 347 A1**
(43) Veröffentlichungstag der Anmeldung: **28.09.2016**
(21) Anmeldenummer: 15161038.3
(22) Anmeldetag: 26.03.2015
(51) Int. Cl.: G05D 23/19

(54) **Anordnung zum Klimatisieren von Räumen eines Gebäudes**

(71) Anmelder: Möhlenhoff GmbH, 38229 Salzgitter (DE)
(72) Erfinder: Büchel, Oliver, 31162 Bad Salzdetfurth (DE)
(74) Vertreter: Döring, Roger

(57) **Zusammenfassung**

Es wird eine Anordnung zum Klimatisieren von Räumen eines Gebäudes angegeben, bei welcher in jedem Raum mindestens ein Gerät angebracht ist, das zumindest einen Temperatursensor, mindestens eine Antenne und einen Sender enthält, der vom Temperatursensor erfaßte Meßwerte als Funksignale zu einer mit einem Regler ausgerüsteten Zentrale des Gebäudes sendet. In der Zentrale sind durch den Regler einstellbare Einheiten zum Zuführen eines der Klimatisierung dienenden Trägers an in den Räumen vorhandene Klimaeinrichtungen angeordnet. In dem Gerät ist zusätzlich eine mit mindestens einer Empfangsantenne verbundene Gleichrichterschaltung angebracht, der von der Empfangsantenne eine durch im jeweiligen Raum des Gebäudes verfügbare elektromagnetische Wellen empfangene Wechselspannung zugeführt wird. An die an einem Ausgang der Gleichrichterschaltung bereitgestellte Gleichspannung ist ein wiederaufladbarer Energiespeicher angeschlossen, welcher der Spannungsversorgung der im Gerät angeordneten Stromverbraucher dient.

## Beschreibung

### Beschreibung

Die Erfindung bezieht sich auf eine Anordnung zum Klimatisieren von Räumen eines Gebäudes, bei welcher in jedem Raum mindestens ein Gerät angebracht ist, das zumindest einen Temperatursensor, mindestens eine Antenne und einen Sender enthält, der vom Temperatursensor erfaßte Meßwerte als Funksignale zu einer mit einem Regler ausgerüsteten Zentrale sendet, in welcher durch den Regler einstellbare Einheiten zum Zuführen eines der Klimatisierung dienenden Trägers an in den Räumen vorhandene Klimaeinrichtungen angeordnet sind (DE 10 2012 015 892 A1).

Unter "Klimatisierung" im Sinne der Erfindung soll insbesondere die Regelung der Temperatur in Räumen eines Gebäudes oder auch der relativen Luftfeuchtigkeit sowie anderer Umgebungsbedingungen in denselben verstanden sein. Stellvertretend für alle möglichen zu regelnden Größen wird im Folgenden die in den Räumen gewünschte Temperatur berücksichtigt. In diesem Sinne wird das in den Räumen angeordnete "Gerät" in der folgenden Beschreibung als "Thermostat" bezeichnet.

Mit einer Anordnung, wie sie eingangs geschildert ist, wird in moderner Technik die Temperatur in den Räumen von Gebäuden beispielsweise in Abhängigkeit von der Außentemperatur erwärmt oder gekühlt. In diesem Sinne wird den Räumen über in denselben installierte Heizkreise entweder ein Heizmedium, wie warmes Wasser, oder ein Kühlmedium, wie gekühltes Wasser, zugeführt. Das Wort "Heizkreis" gilt demnach sowohl für das Zuführen eines Wärmeträgers als auch eines Kühlmediums. Im Folgenden wird die Anordnung nach der Erfindung für das Beheizen von Räumen beschrieben, stellvertretend auch für eine Kühlung, die bis auf das zu transportierende Medium in gleicher Weise wie die Beheizung durchgeführt wird.

In den mit den Heizkreisen ausgerüsteten Räumen von Gebäuden sind bei bekannten Anordnungen Thermostate angeordnet, an denen eine Solltemperatur eingestellt werden kann. Bei einem Abweichen der Isttemperatur von der Solltemperatur in einem Raum wird von dem zugehörigen Thermostat ein Signal zu einer Zentrale übertragen, durch welche die Wärmezufuhr zu dem entsprechenden Raum solange erhöht bzw. reduziert wird, bis die Solltemperatur wieder erreicht ist. In der Zentrale sind beispielsweise ein Regler und Ventile angeordnet, von denenje eins in den Zulauf für das Heizmedium eines in einem jeweiligen Raum vorhandenen Heizkreises eingebaut ist. Die Ventile können durch mit denselben verbundene Stellantriebe in Abhängigkeit von den Signalen der Thermostate der einzelnen Räume auf- und zugesteuert werden.

Bei der bekannten Anordnung nach der eingangs erwähnten DE 10 2012 015 892 A1 ist in einem Gebäude in einer Zentrale ein Heizkreisverteiler installiert, der einen Regler und eine der Anzahl von im Gebäude vorhandenen Heizkreisen entsprechende Anzahl von Ventilen aufweist, von denen jeweils eins in einen Zulauf für einen Wärmeträger eines Heizkreises eingebaut ist. Jedes Ventil ist mit einem Stellantrieb ausgerüstet, durch welchen die den Durchfluß des Wärmeträgers bestimmende Stellung des Ventils zwischen einer Offenstellung und einer Schließstellung als Endpositionen eingestellt wird. Dem Regler werden von in den Thermostaten der einzelnen Räume angebrachten Sendern über Funk Signale zugeführt, nach deren Maßgabe die jeweiligen Ventile geöffnet oder geschlossen werden, mit möglichen Zwischenstufen zwischen der Offenstellung und der Schließstellung. Die in den Thermostaten angebrachten Stromverbraucher werden entweder über elektrische Leitungen oder durch Batterien mit Strom versorgt. Das Verlegen von elektrischen Leitungen in allen Räumen eines Gebäudes ist aufwendig. Batterien haben nur eine begrenzte Lebensdauer, so daß sie regelmäßig überprüft und gegebenenfalls durch neue Batterien ersetzt werden müssen.

Der Erfindung liegt die Aufgabe zugrunde, die eingangs geschilderte Anordnung so zu gestalten, daß insbesondere keine elektrischen Leitungen verlegt werden müssen und keine regelmäßige Überprüfung der Funktionsfähigkeit der Thermostate erforderlich ist.

Diese Aufgabe wird gemäß der Erfindung dadurch gelöst,
- daß in dem Gerät zusätzlich eine mit mindestens einer Empfangsantenne verbundene Gleichrichterschaltung angebracht ist, der von der Empfangsantenne eine durch im jeweiligen Raum des Gebäudes verfügbare elektromagnetische Wellen empfangene Wechselspannung zugeführt wird, und
- daß an die an einem Ausgang der Gleichrichterschaltung bereitgestellte Gleichspannung ein wiederaufladbarer Energiespeicher angeschlossen ist, welcher der Spannungsversorgung der im Gerät angeordneten Stromverbraucher dient.

Bei dieser Anordnung wird für die Spannungsversorgung der im Thermostat enthaltenen Stromverbraucher, insbesondere des Senders, ein wiederaufladbarer Energiespeicher eingesetzt, dessen Ladezustand allein durch äußere elektromagnetische Felder bestimmt wird. Dazu kann mit Vorteil von der Zentrale des Gebäudes gesendete elektromagnetische Strahlung ausgenutzt werden. Es können aber auch, zumindest zusätzlich, ohnehin in den Räumen vorhandene elektromagnetische Felder ausgenutzt werden, wie sie beispielsweise bei dem bekannten Netzwerk WLAN auftreten. Auch die Signale von Mobilfunk sowie Radio und Fernsehen können ausgenutzt werden. Eine entsprechende Empfangsantenne kann mit Vorteil breitbandig im Bereich von 800 MHz bis 2000 MHz arbeiten. Sie kann als Planarantenne ausgeführt sein.

Die von der Empfangsantenne bzw. den Empfangsantennen zu empfangenden Frequenzen liegen im Bereich der vom Gesetzgeber zugelassenen ISM-Bänder. Geeignete Frequenzbereiche liegen beispielsweise bei 868 MHz, die auch zur Übertragung der Signale vom Thermostat zur Zentrale verwendet werden können, sowie bei 2,4 GHz, die beispielsweise beim WLAN eingesetzt werden, oder auch bei 13,56 MHz. In einem breitbandigen Konzept kann auch ein Frequenzbereich von 1 GHz bis 3,5 GHz verwendet werden. In einem schmalbandigen Bereich kann der Frequenzbereich beispielsweise zwischen 1,8 GHz und 1,9 GHz liegen.

Die Thermostate enthalten also eine Vorrichtung zum "Ernten" von Energie aus elektromagnetischer Strahlung. Dabei wird der Begriff "Ernten" für das Empfangen und Nutzen der im Bereich der Thermostate vorhandenen Wechselspannung verwendet, welche aus elektromagnetischen Wellen abgeleitet wird. Geerntet wird dabei mit Vorteil Energie aus einer elektromagnetischen Strahlung, welche den gleichen Frequenzbereich hat, der - wie schon erwähnt - auch zur Kommunikation des Senders mit der Zentrale dient. Es istjedoch auch möglich, wie ebenfalls schon erwähnt, mindestens einen weiteren Frequenzbereich oder mehrere weitere Frequenzbereiche zu nutzen.

Die für das "Ernten" der Wechselspannung dienende elektromagnetische Strahlung kann also aus unterschiedlichen Quellen stammen. Mit Vorteil wird in der Zentrale ein Sender installiert, welcher elektromagnetische Strahlung mit ausreichender Stärke sendet, so daß auch Empfangsantennen in weiter entfernten Räumen noch eine ausreichend hohe Wechselspannung empfangen. Dabei kann dieser Sender auch elektromagnetische Strahlung mit unterschiedlichen Frequenzen aussenden, um beispielsweise unterschiedliche Strahlungsdichten auszugleichen, die durch Absorption, Reflexionen und Interferenzen im Bereich der unterschiedlichen Räume des Gebäudes gebildet werden können.

Prinzipiell kann auch in jedem Raum des Gebäudes oder in ausgewählten Räumen desselben ein elektromagnetische Energie abstrahlender Sender angeordnet werden. Das bietet sich insbesondere für Räume an, die weit von der Zentrale entfernt sind.

In einem Thermostat ist mindestens eine Antenne angeordnet, die dann einerseits als Empfangsantenne zum Ernten der elektromagnetischen Energie und andererseits als Sendeantenne für die vom Sender zur Zentrale zu übertragenden Signale dient. Für diese Signale kann aber auch eine separate Sendeantenne vorgesehen sein. Zweckmäßig werden in einem Thermostat zwei oder mehr als Empfangsantennen dienende Antennen verwendet, die in ihrem Aufbau jeweils auf die Frequenzbereiche abgestimmt sind, aus denen Energie geerntet werden soll.

Aus den von einer breitbandigen Empfangsantenne bzw. zwei oder mehr solcher Antennen empfangenen Wechselspannungen werden in dem geschilderten Erntevorgang nur kleine Leistungen aufgenommen. Sie können beispielsweise zwischen 12,5 pW und 400 pW liegen. Es ist daher zweckmäßig und vorteilhaft, wenn eine spannungserhöhende Gleichrichterschaltung mit einem Netzwerk eingesetzt wird, mittels dessen das Spannungsniveau am Ausgang der Gleichrichterschaltung angehoben werden kann. Ein solches Netzwerk ist beispielsweise ein Spannungsverdoppler oder eine Kaskadenschaltung. Am Ausgang der Gleichrichterschaltung stehen dann beispielsweise zwischen 1,2 V und 1,5 V liegende Spannungen zur Verfügung.

Zwischen der Antenne bzw. den Antennen und der Gleichrichterschaltung kann mit Vorteil eine Schaltung zur Anpassung der Impedanz der Übertragungswege zu den nachfolgenden Schaltungselementen angeordnet sein, durch welche mögliche Verluste minimiert werden.

Als wiederaufladbare Energiespeicher können beispielsweise und mit Vorteil Kondensatoren oder Akkumulatoren eingesetzt werden, die durch die geerntete Energie ständig geladen werden. Zusätzlich kann in den Thermostaten auch eine Batterie, z. B. eine Knopfzelle, angebracht werden, welche der Absicherung der Energieversorgung der Stromverbraucher des jeweiligen Thermostats dient. Der dann realisierte Hybridbetrieb aus Ernten von Energie und Batterie führt dementsprechend zu einer hohen Funktionssicherheit der Anordnung. Die Lebensdauer der Batterie wird außerdem wesentlich verlängert, so daß während der Lebensdauer des jeweiligen Thermostats in der Regel kein Batteriewechsel erforderlich ist.

Die Thermostate können neben der Übermittlung der Meßdaten an die Zentrale auch den Ladezustand ihres Energiespeichers erfassen und an die Zentrale melden. Die Zentrale kann entsprechend dieser Meldung gegebenenfalls von dort abgestrahlte elektromagnetische Strahlung anpassen. Bei einem zu niedrigen Ladestand des Energiespeichers kann die Sendeleistung erhöht werden, während dieselbe bei vollem Energiespeicher reduziert werden kann. Der Sender der Zentrale könnte dann auch abgeschaltet werden. Wenn von den jeweiligen Empfangsantennen ausreichend Energie aus anderen Quellen in der Umgebung der Thermostate geerntet werden kann, dann kann das Senden von elektromagnetischer Strahlung aus der Zentrale deaktiviert werden. Die Zentrale verbraucht dann keine unnötige Energie.

Ein Ausführungsbeispiel der Anordnung nach der Erfindung ist in den Zeichnungen dargestellt.

Es zeigen:
Fig. 1 in schematischer Darstellung ein Schnittbild eines Gebäudes mit mehreren Räumen.
Fig. 2 in schematischer Darstellung eine bei der Anordnung nach der Erfindung einsetzbare elektrische Schaltung.
Fig. 3 Einzelheiten aus Fig. 2 in genauerer Darstellung.

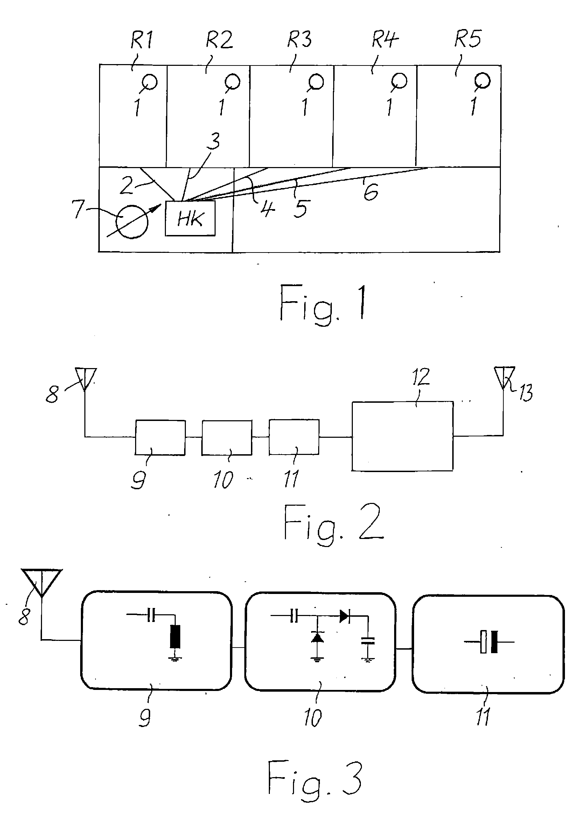

Fig.1 zeigt in einer sehr schematischen Darstellung eine Ansicht eines Gebäudes mit fünf Räumen R1 bis R5, in denen jeweils ein Thermostat 1 angeordnet ist, durch welchen die in dem jeweiligen Raum herrschende Temperatur erfaßt wird. In dem Gebäude ist außerdem in einer Zentral ein Heizkreisverteiler HK installiert, an den zu den Räumen R1 bis R5 führende Rohre 2, 3, 4, 5 und 6 angeschlossen sind, die mit in den Räumen R1 bis R5 angeordneten Heizkreisen verbunden sind. Die Rohre 2 bis 6 dienen zur Zuführung eines Heizmediums, vorzugsweise Wasser, an die Heizkreise. Als Heizkreise können beispielsweise Flächenheizsysteme, Radiatoren oder andere Wärmetauscher in den Räumen R1 bis R5 installiert sein. Es ist auch möglich, mehr als einen Heizkreis in einem Raum anzuordnen. Zu jedem dieser Heizkreise führt dann ein separates Rohr. Die Anzahl der Räume des Gebäudes ist beliebig. Es können also auch mehr oder weniger als fünf Räume im Gebäude vorhanden sein, die jeweils mindestens einen Heizkreis aufweisen.

Im Bereich des Heizkreisverteilers HK ist in der Zentrale des Gebäudes außerdem ein Regler 7 angeordnet, der vorzugsweise mit einer elektronischen Speicherfunktion ausgerüstet ist. Dem Regler 7 können von den Thermostaten 1 der einzelnen Räume Signale per Funk zugeführt werden. Die Signale der Thermostate 1 entsprechen beispielsweise nur dem Istwert der im jeweiligen Raum herrschenden Temperatur. Der Sollwert der Temperatur ist dann für jeden Raum des Gebäudes im Speicher des Reglers 7 abgelegt. Bei einer Erfassung von Istwert und Sollwert der Raumtemperatur durch die Thermostate 1 in den Räumen R1 bis R5 werden als Signale sowohl die Istwerte als auch die Sollwerte der Raumtemperatur zum Regler 7 übertragen. Bei einer Abweichung des Istwerts der Raumtemperatur vom im Regler 7 gespeicherten Sollwert werden im Heizkreisverteiler HK angeordnete Elemente im Ausgleichssinne geregelt.

In der Zentrale des Gebäudes ist mit Vorteil ein Sender angeordnet, welcher im Bedarfsfall elektromagnetische Strahlung mit Frequenzen bzw. Frequenzbereichen aussendet, die im Bereich der vom Gesetzgeber zugelassenen ISM-Bänder liegen. Die Wechselspannung der elektromagnetischen Strahlung wird von in den Thermostaten 1 angeordneten Antennen empfangen bzw. "geerntet". Das wird beispielsweise anhand der Fig. 2 und 3 erläutert.

Fig. 2 zeigt rein schematisch den grundsätzlichen Aufbau einer Anordnung nach der Erfindung. Mit einer mit Vorteil breitbandigen Empfangsantenne 8 werden Wechselspannungen mit kleiner Leistungen aus elektromagnetischer Strahlung in verschiedenen Frequenzbereichen aufgenommen. An die Empfangsantenne 8 ist eine Anpassungsschaltung 9 angeschlossen, welche der Anpassung der Impedanz der Übertragungswege zu den nachfolgenden Schaltungselementen und zur Minimierung von Verlusten dient. Ihr möglicher schaltungstechnischer Aufbau geht beispielsweise aus Fig. 3 hervor.

An die Anpassungsschaltung 9 ist eine Gleichrichterschaltung 10 angeschlossen ist, die mit Vorteil als spannungserhöhende Gleichrichterschaltung in Form einer Spannungsverdoppler-Schaltung oder als mehrstufige Kaskadierungsschaltung ausgeführt sein kann. In Fig. 3 ist eine Stufe einer solchen Schaltung angedeutet. Der Ausgang der Gleichrichterschaltung 10 ist mit einem wiederaufladbaren Energiespeicher 11 verbunden, der beispielsweise entsprechend Fig. 3 als Kondensator oder als Akkumulator ausgeführt sein kann.

An den Energiespeicher 11 sind die nur durch einen Kasten 12 angedeuteten Stromverbraucher des jeweiligen Thermostats 1 angeschlossen. Diese Stromverbraucher sind an sich bekannt. Es kann sich insbesondere um einen Temperatursensor, einen Sender oder einen Transceiver und einen Mikroprozessor handeln. Eine Antenne 13 kann eine Sendeantenne sein, welche die vom Temperatursensor gelieferten Werte als Signale an die Zentrale des Gebäudes sendet.

## Patentansprüche

1. Anordnung zum Klimatisieren von Räumen eines Gebäudes, bei welcher in jedem Raum mindestens ein Gerät angebracht ist, das zumindest einen Temperatursensor, mindestens eine Antenne und einen Sender enthält, der vom Temperatursensor erfaßte Meßwerte als Funksignale zu einer mit einem Regler ausgerüsteten Zentrale des Gebäudes sendet, in welcher durch den Regler einstellbare Einheiten zum Zuführen eines der Klimatisierung dienenden Trägers an in den Räumen vorhandene Klimaeinrichtungen angeordnet sind, **dadurch gekennzeichnet,**
- **daß** in dem Gerät zusätzlich eine mit mindestens einer Empfangsantenne (8) verbundene Gleichrichterschaltung (10) angebracht ist, der von der Empfangsantenne (8) eine durch im jeweiligen Raum des Gebäudes verfügbare elektromagnetische Wellen empfangene Wechselspannung zugeführt wird, und
- **daß** an die an einem Ausgang der Gleichrichterschaltung (10) bereitgestellte Gleichspannung ein wiederaufladbarer Energiespeicher (11) angeschlossen ist, welcher der Spannungsversorgung der im Gerät angeordneten Stromverbraucher dient.

2. Anordnung nach Anspruch 1, **dadurch gekennzeichnet, daß** eine spannungserhöhende Gleichrichterschaltung (10) eingesetzt ist.

3. Anordnung nach Anspruch 2, **dadurch gekennzeichnet, daß** die Gleichrichterschaltung eine Spannungsverdoppler-Schaltung ist.

4. Anordnung nach Anspruch 2, **dadurch gekennzeichnet, daß** die Gleichrichterschaltung eine mehrstufige Kaskadierungsschaltung ist.

5. Anordnung nach Anspruch 1, **dadurch gekennzeichnet, daß** der Energiespeicher (11) ein Akkumulator ist.

6. Anordnung nach Anspruch 1, **dadurch gekennzeichnet, daß** der Energiespeicher (11) ein Kondensator ist.

7. Anordnung nach Anspruch 1, **dadurch gekennzeichnet, daß** zwischen der Empfangsantenne (8) und der Gleichrichterschaltung (10) eine Schaltung (9) zur Anpassung der Impedanz der Übertragungswege zu den nachfolgenden Schaltungselementen angeordnet ist.

8. Anordnung nach Anspruch 1, **dadurch gekennzeichnet, daß** in der Zentrale des Gebäudes ein zum Aussenden von elektromagnetischer Strahlung geeigneter Sender angeordnet ist.

9. Anordnung nach Anspruch 1, **dadurch gekennzeichnet, daß** in den Räumen des Gebäudes zumindest teilweise zum Aussenden von elektromagnetischer Strahlung geeignete Sender angeordnet sind.

10. Anordnung nach Anspruch 1, **dadurch gekennzeichnet, daß** die in der Zentrale vorhandenen Einheiten zum Zuführen eines Wärmeträgers bzw. eines Kühlmediums an in den Räumen angeordnete Heizkreise geeignete Bauteile sind.
